# EUROPEAN PATENT APPLICATION

(11) **EP 2 664 996 A2**
(43) Date of publication of application: **20.11.2013**
(21) Application number: 13162383.7
(22) Date of filing: 04.04.2013
(51) Int. Cl.: G06F 17/21, G06F 17/28, G06F 3/01, G06F 3/023

(54) **Method for correcting character style and an electronic device therefor**

(30) Priority: 17.05.2012 KR 20120052583
(71) Applicant: Samsung Electronics Co., Ltd, Gyeonggi-do 443-742 (KR)
(72) Inventor: SHIN, Sang-Min, Gyeonggi-do (KR)
(74) Representative: Birchenough, Lewis

(57) **Abstract**

An electronic device receives manual input of strokes representing input text, and is used with an apparatus and method for automatically correcting the text which is input by a user into the electronic device. In a method of correcting a font of the text output by the electronic device, the method includes inputting a text, changing a font of the input text, and outputting the text whose font is changed.

## Description

### BACKGROUND OF THE INVENTION

### 1. Field of the Invention

The present invention relates to an electronic device capable of manual input, and more particularly, to an apparatus and method for correcting a text which is input by a user into the electronic device.

### 2. Description of the Related Art

Electronic devices have become necessities of modern life due to their easiness of portability, and are under development into multimedia devices for providing various services such as audio and video telephony functions, information input and output functions, and data storage functions.

Accordingly, an amount of information to be processed and an amount of information to be displayed are increased since the electronic device provides a multimedia service. Accordingly, there is a growing interest in an electronic device having a touch screen capable of increasing a size of a display unit by improving space utilization.

The touch screen is a known device providing a combination of an input and display unit which inputs and displays information in one screen. Accordingly, in the case of using a touch screen, the electronic device may increase a display area by removing or omitting an additional input unit such as a keypad. For example, in the case of using a full touch mechanism which applies the touch screen to a full screen, a screen size may be increased by using a front surface of the electronic device as a screen.

In addition, the electronic device using the touch screen may be used to write a text or draw a line by using an input tool such as a stylus pen and an electronic pen.

In order to input the text, the user may be allowed to manually input a text on the touch screen, and the electronic device may be allowed to output the input text by tracing and displaying a coordinate at which the touch input is generated.

Such a method has an advantage in that a text corresponding to a handwriting of the user who manually inputs the text may be directly output.

However, if the user is not used to the manual input or does not have a good handwriting style, the text input to the electronic device may not be smoothly output.

Due to the aforementioned reasons, more users do not use a text input function based on the manual input.

Accordingly, in order to solve the aforementioned problem, there is a need for an apparatus and method for correcting a shape of a text which is manually input in the electronic device.

### SUMMARY OF THE INVENTION

An aspect of the present invention is to solve at least the above-mentioned problems and/or disadvantages and to provide at least the advantages described below. Accordingly, an aspect of the present invention is to provide an apparatus and method for correcting a text which is input by a user into an electronic device.

Another aspect of the present invention is to provide an apparatus and method for applying an effect of a specific font to a text which is input by a user into an electronic device.

Another aspect of the present invention is to provide an apparatus and method for correcting a position of a text which is input by a user into an electronic device.

In accordance with a first aspect of the present invention, a method of correcting a font of an electronic device is provided. The method includes inputting a text, changing a font of the input text, and outputting the text whose font is changed.

In accordance with a second aspect of the present invention, an apparatus for correcting a font of an electronic device is provided. The apparatus includes at least one processor, a memory, and at least one module stored in the memory and configured to be executable by the at least one processor, wherein the module includes an instruction for inputting a text, changing a font of the input text, and outputting the text whose font is changed.

In accordance with a third aspect of the present invention, a computer-readable storage medium is provided for storing one or more programs, if executed by an electronic device, including instructions for inputting a text, changing a font of the input text, and outputting the text whose font is changed.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is a block diagram illustrating a structure of an electronic device for automatically correcting a text according to an exemplary embodiment of the present invention;
FIG. 2 is a flowchart illustrating a process of correcting a text of the electronic device according to the exemplary embodiment of the present invention;
FIG. 3 is a flowchart illustrating a process of correcting a font of text in the electronic device according to the exemplary embodiment of the present invention;
FIGS. 4A-4C illustrate a delicate correction process of the electronic device according to the exemplary embodiment of the present invention;
FIGS. 5A-5C illustrate a font correction process of the electronic device according to the exemplary embodiment of the present invention;
FIGS. 6A-6C illustrate a position correction process of the electronic device according to another exemplary embodiment of the present invention;
FIG. 7 is a flowchart illustrating a text correction process of the electronic device according to the exemplary embodiment of the present invention;
FIG. 8 is a flowchart illustrating a text correction process of the electronic device according to another exemplary embodiment of the present invention;
FIG. 9 illustrates a stroke correction process of the electronic device according to the exemplary embodiment of the present invention;
FIG. 10 illustrates a stroke correction process of the electronic device according to another exemplary embodiment of the present invention;
FIG. 11 is a flowchart illustrating a correction ratio regulation process of the electronic device according to the exemplary embodiment of the present invention;
FIG. 12 is a flowchart illustrating a text correction process of the electronic device according to the exemplary embodiment of the present invention;
FIG. 13 is a flowchart illustrating a text correction process of the electronic device according to another exemplary embodiment of the present invention;
FIGS. 14A-14C illustrate a text correction process of the electronic device according to the exemplary embodiment of the present invention; and
FIGS. 15A-15B illustrate a text correction process of the electronic device according to another exemplary embodiment of the present invention.

### DETAILED DESCRIPTION OF THE INVENTION

Exemplary embodiments of the present invention will be described herein below with reference to the accompanying drawings. In the following description, well-known functions or constructions are not described in detail since they would obscure the invention in unnecessary detail. The present invention may, however, be embodied in many different forms and should not be construed as limited to the exemplary embodiments set forth herein. In addition, terms described herein, which are defined with reference to the functions of the present invention, may be implemented differently depending on a user or operator's intention and practice. Therefore, the terms should be understood on the basis of the disclosure throughout the specification. The principles and features of this invention may be employed in varied and numerous embodiments without departing from the scope of the invention.

The same reference numbers are used throughout the drawings to refer to the same or like parts. Furthermore, although the drawings represent exemplary embodiments of the invention, the drawings are not necessarily to scale and certain features may be exaggerated or omitted in order to more clearly illustrate and explain the present invention.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among the terms set forth herein, an icon refers to a graphical element such as a figure or a symbol displayed on the screen of the device such that a user may easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among the terms set forth herein, data refers to any kind of information processed by the device, including text and/or images received from any external entities, messages transmitted or received, and information created when a specific function is executed by the device.

The present invention described hereinafter relates to an apparatus and method for automatically correcting a text which is manually input by a user in an electronic device. In general, the text is character data such as an individual element in an English alphabet, a Korean vowel and consonant, a numeric character, a special character or symbol (e.g., "<", "*", "#", etc.), or the like which may be input by using a keypad of the electronic device. Further, the text may be character data which may be input by using a manual input on a touch screen of the electronic device, and the correcting of the text includes correcting of a font, correcting of a position of the text, or the like.

The correcting of the font described in the present invention is defined herein as correcting of a shape (e.g., a type, size, etc.) of the font before outputting the text, which is input by the user, from a display unit.

In addition, the correcting of the position of the text described in the present invention is defined herein as correcting of a direction, arrangement, spacing interval, or the like of elements of the text before outputting the text, which is input by the user, from the display unit.

In addition, the electronic device may be a portable electronic device, and may be any known device such as, for example, a portable terminal, a mobile phone, a media player, a tablet computer, a handheld computer, or a Personal Digital Assistant (PDA). Further, the electronic device may be any known portable electronic device including a device which combines two or more functions of such example devices.

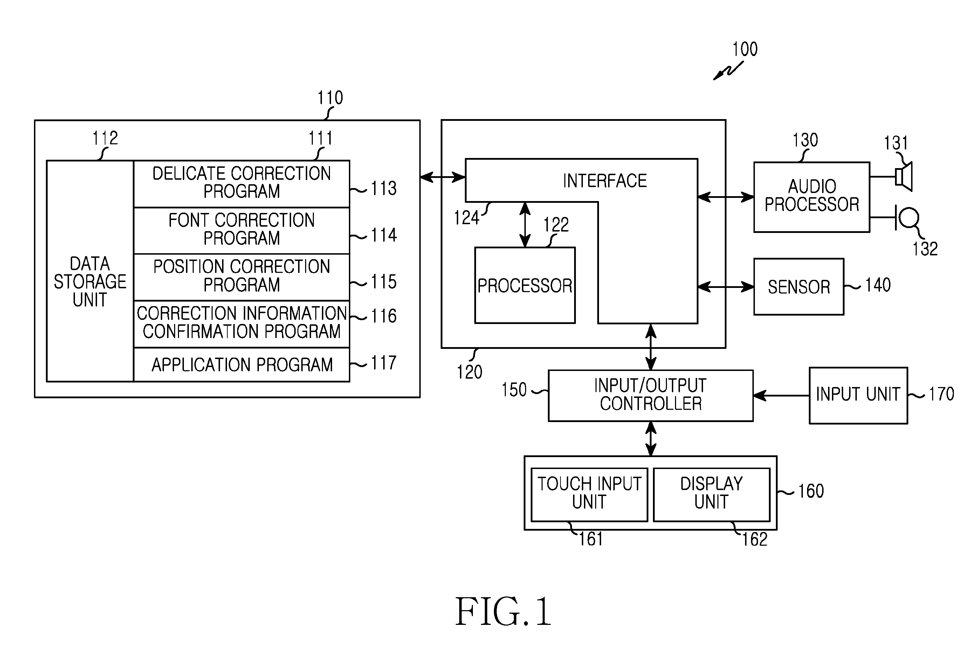

FIG. 1 is a block diagram illustrating a structure of an electronic device for automatically correcting a text according to an exemplary embodiment of the present invention.

Referring to FIG. 1, the electronic device 100 includes a memory 110, a processor unit 120, an audio processor 130, a sensor 140, an input/output controller 150, a touch screen 160, and an input unit 170. Herein, the memory 110 and the sensor 140 may be plural in number.

Each component will be described below in greater detail.

The memory 110 includes a program storage unit 111 for storing a program for controlling an operation of the electronic device 100 and a data storage unit 112 for storing data, including previously stored data as well as data generated while the program is executed. For example, the data storage unit 112 stores a variety of rewritable data, such as phonebook entries, outgoing messages, incoming messages, and text information recognized by sensing an input generated by a user.

In addition, the program storage unit 111 includes a delicate correction program 113, a font correction program 114, a position correction program 115, a correction information confirmation program 116, and at least one application program 117. Herein, any program included in the program storage unit 111 is a group of instructions, and may be expressed as an instruction set.

The delicate correction program 113 includes at least one software component for delicately correcting a text which is input by the user. That is, the delicate correction program 113 may correct an abnormal part of the text which is input by the user. Herein, the abnormal part may be a part which is input such that at least one of the text strokes protrudes in a portion in which the text strokes overlap with each other. In this case, the delicate correction program 113 corrects the text by deleting a protruding part so that the text has a smooth shape.

In addition, the abnormal part may be a part in which a text stroke constituting the text is abnormally input. In this case, the delicate correction program 113 corrects the text by extending a part which is abnormally input, so that the text has the smooth shape.

The font correction program 114 includes at least one software component which changes the text which is input by the user in such a manner that a size of the text is changed or a font is changed according to a pre-set correction value. Herein, the changing of the font is defined as outputting of the text which is input by the user by automatically changing a pre-set type font (i.e., a correction font) of the text and outputting the changed text on a display unit 162, and the changing of the size is defined herein as correcting of the text so that the text is output with a pre-set size to the display unit 162 irrespective of the size of the text, which is input by the user, on the touch screen 160. For example, the changing of the font may include changing of a text which is manually input by the user to a palace-style font (i.e., an old Korean special calligraphy style used by court maids in a palace) or applying an effect of the palace-style font to the input text. Further, if a large-sized text is input to an input region in which the user manually inputs the text, the changing of the size may include changing of the size to a pre-set small size.

The position correction program 115 includes at least one software component for correcting a width or spacing interval of each text or each of the elements of the text which is input by the user according to a pre-set rule and for outputting the corrected text to the display unit 162. This is because, when using an input tool such as an electronic pen or a stylus pen, it is difficult to input the text on the touch screen 160 according to a specific rule.

For example, the position correction program 115 may define a reference line for position correction and locate each input text on the reference line. Further, the position correction program 115 may equally correct a direction of each text located on the reference line so that the text arranged by a specific rule is output to the display unit 162.

The font correction program 114 and the position correction program 115 may correct the text by a respective pre-set correction rule.

In addition, the correction information confirmation program 116 includes at least one software component for confirming text correction information configured by the user. For example, the user may configure correction information regarding a correction font type, a size, a correction ratio, a font position, etc.

The application program 117 includes a software component for at least one application program installed in the electronic device 100.

The processor unit 120 includes at least one processor 122 and an interface 124. Herein, the processor 122 and the interface 124 may be implemented as at least one integrated circuit or separated and/or independent individual components.

The interface 124 performs the role of a memory interface for controlling an access of the processor 122 and the memory 110 to other components and devices.

In addition, the interface 124 performs the role of an interface of a peripheral device for controlling a connection between the processor 122 and an input/output peripheral device of the electronic device 100.

The processor 122 controls the electronic device 100 to provide a text input function by using at least one software program. In this case, the processor 122 executes at least one program stored in the memory 110 to provide a text input service corresponding to the program. For example, the processor 122 may include a correction processor for correcting a font, a text position, etc. That is, the font correction process of the electronic device 100 may be performed in software such as a program stored in the memory 110 or hardware such as the correction processor implemented in the processor 122.

The audio processor 130 provides an audio interface between the user and the electronic device 100 by using a speaker 131 and a microphone 132.

The sensor 140 includes a sensor device which senses a motion of the electronic device 100 or senses an external light beam. In addition, sensing information acquired by the sensor 140 is used to regulate a font correction ratio. That is, in the case of acquiring the sensing information which shows that the electronic device 100 is in motion, the sensor 140 provides the information to the processor 122 to increase the font correction ratio or to correct a position of the text. This is because there are many cases in which the text is abnormally input when in motion.

The input/output controller 150 provides a connection between an interface and an input/output unit, such as the touch screen 160 and the input unit 170.

The touch screen 160 is an input/output unit for performing both an information output and an information input, and includes a touch input unit 161 and the display unit 162.

The touch input unit 161 provides touch information, sensed by using a touch panel of the touch screen 160, using any known touch sensing technology, to the processor unit 120 via the input/output controller 150. In this case, the touch input unit 161 changes the touch information to a corresponding electronic instruction such as a touch_down (touch), a touch_move (touch drag), a touch_up (touch release), etc., and provides the corresponding electronic instruction to the processor unit 120.

The display unit 162 displays status information of the electronic device 100, as well as displays a character which is input by the user, a moving picture, a still picture, etc. For example, the display unit 162 displays the text which is input by the user, a correction process for the text, and a text subjected to the correction process.

The input unit 170 provides input data, generated by a user's selection, to the processor unit 120 via the input/output controller 150. For example, the input unit 170 may include only a control button for controlling the electronic device 100. In another example, the input unit 170 may include a keypad for receiving input data provided from the user.

The electronic device 100 may further include a communication system, incorporated in or connected to the interface 124, which performs a communication function for voice communication and data communication. In this case, the communication system may be divided into a plurality of communication sub-modules for supporting different communication networks. For example, the communication network may include, but is not limited to, a Global System for Mobile communication (GSM) network, an Enhanced Data GSM Environment (EDGE) network, a Code Division Multiple Access (CDMA) network, a Wideband-Code Division Multiple Access (W-CDMA) network, a Long Term Evolution (LTE) network, an Orthogonal Frequency Division Multiple Access (OFDMA) network, a Wireless Local Area Network (WLAN), a BLUETOOTH network, a Near Field Communication (NFC) network, etc.

In addition, the electronic device 100 may be directly connected to an external electronic device or includes a connection interface, included in or implemented by the interface 124, for connecting to another electronic device through a network. For example, the electronic device 100 may be connected to another electronic device by using a Universal Serial Bus (USB) port, a High-Definition Multiple Interface (HDMI) port, etc.

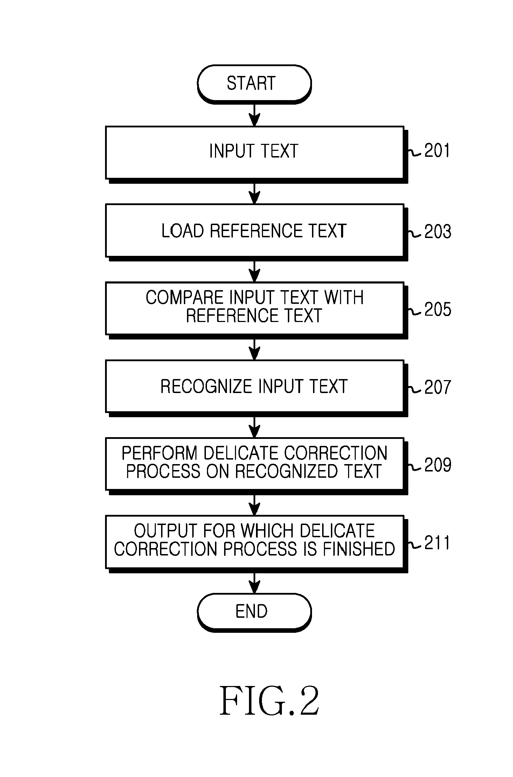

FIG. 2 is a flowchart illustrating a process of correcting a text of the electronic device 100 according to the exemplary embodiment of the present invention.

Referring to FIG. 2, the electronic device 100 receives a text input by a user in step 201, and thereafter loads a reference text in step 203. Herein, the reference text is reference information used to determine and analyze a text corresponding to a user input. The electronic device 100 may store the reference text by defining the reference text with respect to an English alphabet, a numeric character, a Korean alphabet, a special character, etc.

In step 205, the electronic device 100 compares the text input in step 201 with the reference text loaded in step 203. In step 207, the electronic device 100 recognizes the text which is input by the user.

In this case, the electronic device 100 may use the reference type to not only determine whether the text input by the user is an individual element in the Korean alphabet or a numeric character but also to confirm a text shape (e.g., a Korean consonant type, an alphabet type, a numeric character, etc.) in greater detail. For example, even if the user inputs a shape (e.g., ">", ")", etc.) similar to a Korean "¬" in the Korean alphabet, the electronic device 100 may determine that the user inputs "¬" by using a reference text for the Korean alphabet. In the same manner, even if the user inputs a text (e.g., "<", "⊏", etc.) whose shape is similar to an English "c" in the English alphabet, the electronic device 100 may determine that the user inputs "c" by using a reference text for the English alphabet. Regarding other language texts such as Japanese text and Chinese text, the same method may be used to determine the input text. Also, the reference text may include a plurality of languages, numeric and/or special characters as well as symbols.

In step 209, the electronic device 100 performs a delicate correction process on the recognized text. Herein, the delicate correction process is defined as a correction process for delicately correcting the shape of the text which is input by the user so that the text is smoothly output to the display unit 162.

For example, the electronic device 100 may delicately correct the text which is input by the user by deleting a stroke which protrudes from the text. Further, the electronic device 100 may delicately correct the text which is input by the user by regulating a distance between strokes of the text.

In addition, the electronic device 100 may extend a stroke which is abnormally input to delicately correct the text which is input by the user.

In step 211, the electronic device 100 outputs the text for which the delicate correction process is finished. Then, the procedure of FIG. 2 ends.

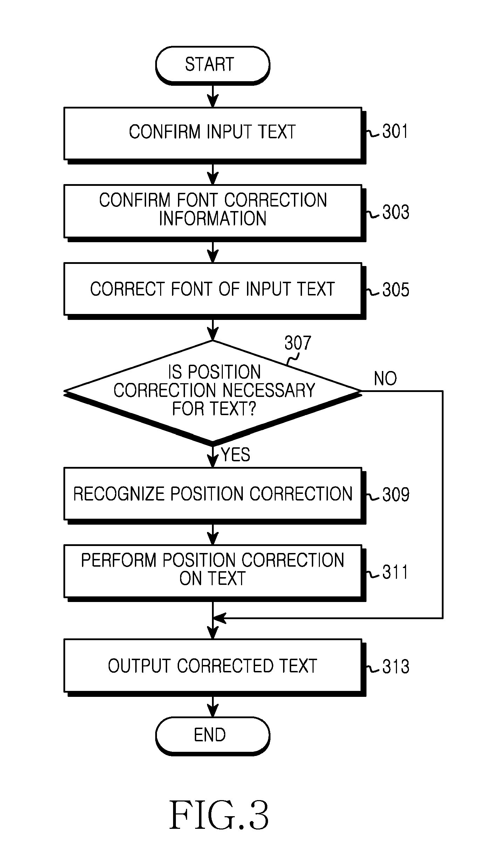

FIG. 3 is a flowchart illustrating a process of correcting a font of text in the electronic device 100 according to the exemplary embodiment of the present invention.

Referring to FIG. 3, in step 301, the electronic device 100 confirms an input text by sensing an input of a user.

In step 303, the electronic device 100 confirms font correction information. Herein, the font correction information is a correction value for correcting a font of the text which is input by the user, and may be a correction font type, a correction size, or the like which may be configured, for example, at an earlier time by the user.

In step 305, the electronic device 100 performs a font correction process for the input text. Herein, the font correction process is a process of correcting a shape of the font before outputting the text, which is input by the user, to the display unit 162, and may be a process of changing the font or correcting a size of the font.

For example, if it is confirmed that the correction font type is set to a Gothic font among the font correction information, the electronic device 100 corrects the shape of the text which is input by the user to a shape of the Gothic font.

In one exemplary embodiment, the electronic device 100 may correct the text which is input by the user to the shape of the Gothic font by allowing a horizontal stroke and a vertical stroke of the text to have a constant thickness.

In addition, if it is confirmed that a small-sized font is set as font correction information, even if the user inputs a large-sized text, the electronic device 100 may correct the text such that the small-sized font is output to the display unit 162.

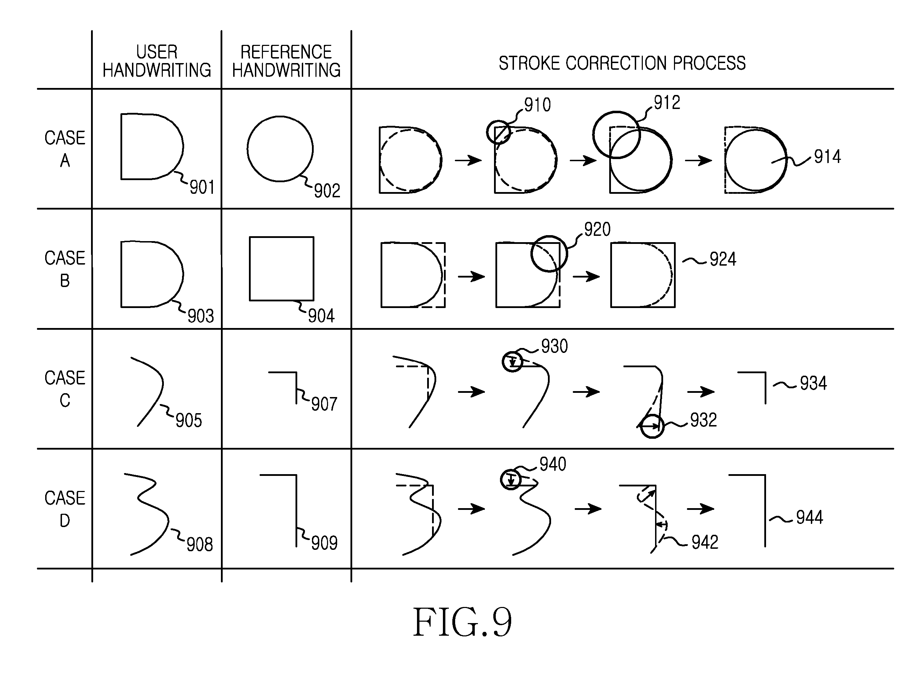

The aforementioned correction process may be performed on the basis of a pre-set correction ratio, in that the font may be corrected on the basis of a user's handwriting, rather than simply changing a handwriting which is input by the user to a digital text. That is, if the correction ratio is 100%, the electronic device 100 may perform a font correction process for changing the input text to the digital text, and if the correction ratio is 50%, the electronic device 100 may correct the input text by applying an effect corresponding to the font to a specific region of the text while maintaining the user's handwriting. The reference text stated with reference to Fig. 2 or the reference table stated with reference to Fig. 3 or a reference handwriting to be stated with reference to Fig. 9 (for example, for set of symbols or characters for each individual alphabet and/or Korean characters) may include digital like text corresponding to the correction ratio 50%. As an another embodiment, the correction ratio 50 % may be implemented by mixing the font data of input text and the font data of the full digital text corresponding to the input text in the reference text or the reference table stored in the electronic device or stored in a device wirelessly connected to the electronic device. The font data mixing may be accomplished by known data processing technology.

In step 307, the electronic device 100 confirms whether position correction of the text is necessary. Herein, the position correction is for outputting different entries of texts which are input by the user by arranging the texts in a regular form. This is to solve a problem in that an entered text is typically arranged irregularly when the text is input while the user and/or the electronic device 100 is in motion.

If it is confirmed in step 307 that the position correction is not necessary, the method proceeds to step 313, and the electronic device 100 outputs to the display unit 162 the text subjected to the correction process. In this case, the text output to the display unit 162 is a text subjected to the font correction process.

Otherwise, if it is determined in step 307 that the position correction is necessary, the electronic device 100 recognizes a correction ratio in step 309, and performs a position correction process on a text on the basis of the correction ratio in step 311.

For example, if the user inputs multiple texts while in motion, each text may be arranged irregularly. Accordingly, the electronic device 100 may select a reference row or column of text, and may rearrange the position of each text according to the reference row or column.

In step 313, the electronic device 100 outputs to the display unit 162 the text subjected to the correction process. In this case, the text output to the display unit 162 is a text subjected to the font correction process and the position correction process.

Thereafter, the procedure of FIG. 3 ends.

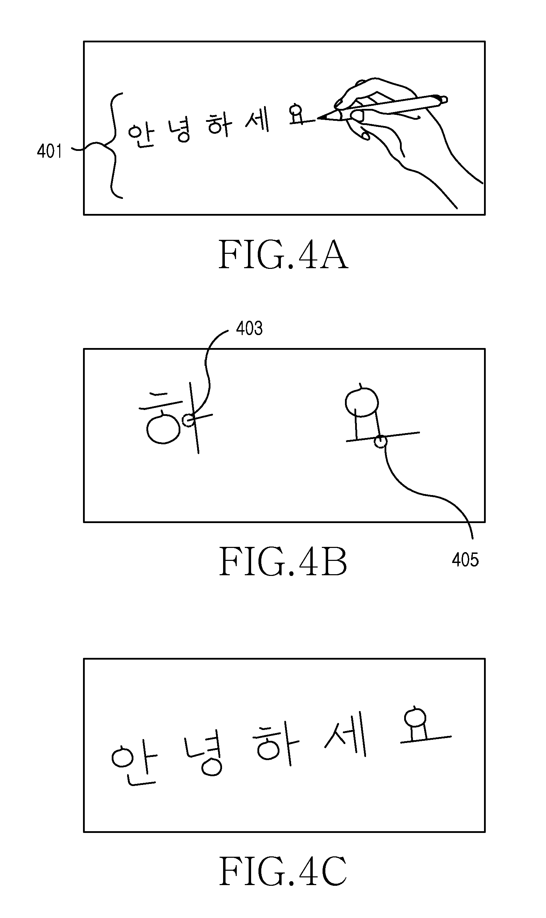

FIGS. 4A-4C illustrate a delicate correction process of the electronic device 100 according to the exemplary embodiment of the present invention.

Referring to FIG. 4A, the electronic device 100 recognizes a text which is input by a user. In the example shown in FIG. 4A, the user manually inputs a text " 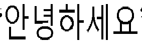 " 401 in Korean characters.

Upon recognizing the text which is input by the user as described above, the electronic device 100 confirms abnormal input parts 403 and 405 from the recognized text as shown in FIG. 4B. Herein, the abnormal input part may be a part which is input such that at least one of the strokes protrudes in a portion in which the strokes overlap with each other.

In addition, the abnormal input part may correspond to a situation in which a stroke constituting the text is abnormally input.

Although the part having the protruding stroke is illustrated as the abnormal input parts 403, 405 in FIG. 4B, the abnormal input part is defined herein as a part in which the text is not clearly input.

Thereafter, the electronic device 100 performs a correction process on the abnormal input parts 403 and 405 as described above so as to output the text as shown in FIG. 4C.

That is, the electronic device 100 performs the correction process by deleting the part having the protruding stroke and extending the part in which the stroke is abnormally input, so that the input text has a smooth shape.

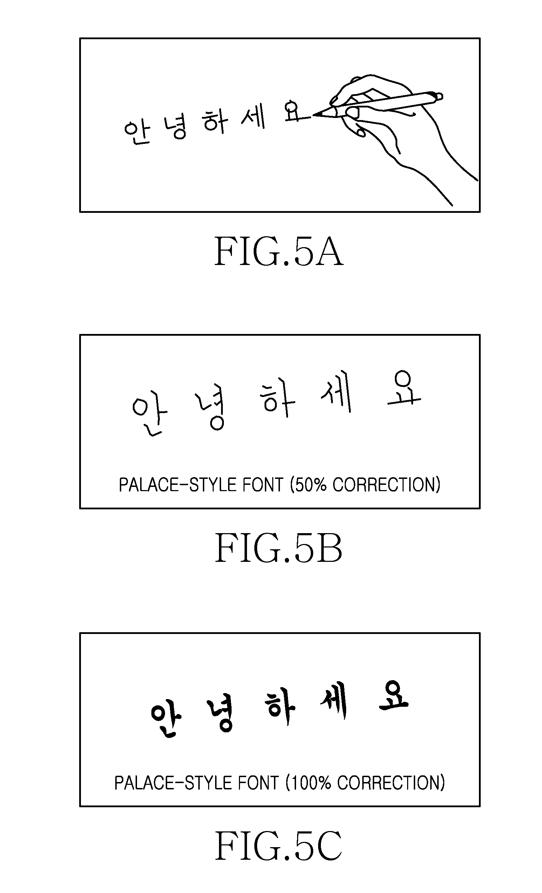

FIGS. 5A-5C illustrate a font correction process of the electronic device 100 according to the exemplary embodiment of the present invention.

Referring to FIG. 5A, the electronic device 100 recognizes a text which is input by a user. In the example of FIG. 5A, the user manually inputs a text " 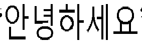 " in Korean characters.

Upon recognizing the text which is input by the user as described above, the electronic device 100 changes a font of the recognized text as shown in FIG. 5B. In this case, by changing the input text to a font which is pre-set by the user, i.e., a palace-style font, the electronic device 100 may apply an effect corresponding to the palace-style font to each stroke. That is, the electronic device 100 may apply the effect corresponding to the palace-style font by regulating a thickness thereof at a specific position of each stroke.

In this case, the electronic device 100 may regulate a level of changing the font according to a correction ratio, and the palace-style font is applied to a user's handwriting by correcting the text with the correction ratio of 50% as shown in FIG. 5B. In this case, the electronic device 100 may apply the effect of the palace-style font to a part of the user's handwriting to correct the text with the correction ratio of 50%.

The reference text stated with reference to Fig. 2 or the reference table stated with reference to Fig. 3 or the reference handwriting to be stated with reference to Fig. 9 (for example, for set of symbols or characters for each individual alphabet and/or Korean characters) may include font data information corresponding to the correction ratio 50%. As an another embodiment, the correction ratio 50 % may be implemented by mixing the font data of input text and the font data of the font styles corresponding to the input text stored in the reference text or the reference table stored in the electronic device. Recognition of font style of handwritten text may be performed by known technology. The reference text or the reference table may be stored in a device wirelessly connected to the electronic device. The font data mixing may be accomplished by known data processing technology.

If a pre-set correction ratio is 100%, the electronic device 100 may apply the effect corresponding to the palace-style font as shown in FIG. 5C. However, if the correction ratio is 100%, it may be impossible to confirm the user's handwriting from the changed font, since the user's handwriting has been replaced completely, that is, 100% of the text has been corrected to correspond identically to the standard palace-style font.

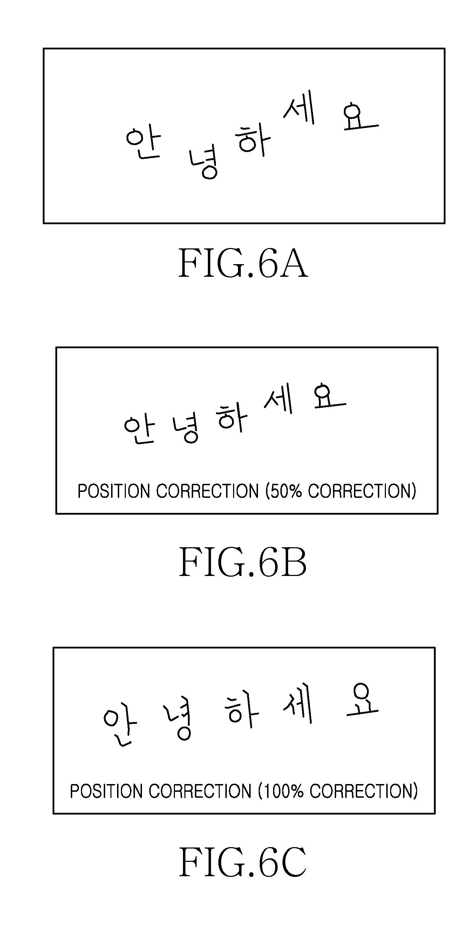

FIGS. 6A-6C illustrate a position correction process of the electronic device 100 according to another exemplary embodiment of the present invention.

Referring to FIG. 6A, the electronic device 100 recognizes a text which is input by a user. In the example of FIG. 6A, the user manually inputs a text " 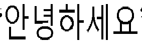 ". In this case, if the user is in motion or is not used to performing a text input, the user may input the text such that the text is positioned irregularly as illustrated in FIG. 6A.

If the text is input such that the text is positioned irregularly as described above, the electronic device 100 may perform a position correction process as shown in FIGS. 6B-6C.

In this case, the electronic device 100 may correct the position of the text according to a pre-set correction ratio or correct the position of the text according to an external environment. Herein, the external environment is an environment in which a regular text input of the user is impossible. For example, the external environment may be an environment in which the user is in motion by using a vehicle, is walking on foot, etc.

As illustrated by FIGS. 6B-6C, the text is corrected in such a manner that, the higher the correction ratio, the more regularly the text is positioned.

The reference row or column of text (for example, for set of symbols or characters for each individual alphabet and/or Korean characters) stated in connection with Fig. 2 or the reference handwriting to be stated with reference to Fig. 9 may include position information corresponding to each correction ratio, for example according to the correction ratio 5% ∼ 100% with 1% increment each. As an another embodiment, for example, the correction ratio 50% may be implemented by using of position information of each low or column of input text and position information of each low or column of the reference row or column of text. The reference row or column of text may be stored in the electronic device or may be stored in a device wirelessly connected to the electronic device. The using of position information may be accomplished by known data processing technology.

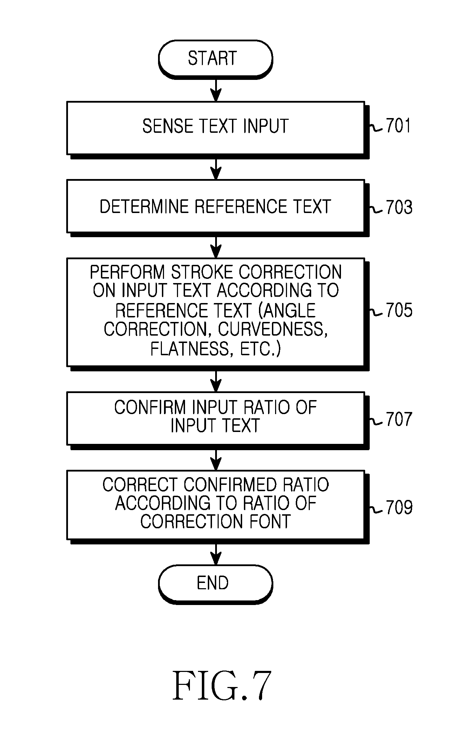

FIG. 7 is a flowchart illustrating a text correction process of the electronic device 100 according to the exemplary embodiment of the present invention.

Referring to FIG. 7, the electronic device 100 senses a text input in step 701, and determines a reference text in step 703. Herein, the reference text is defined as reference information used to determine a text corresponding to a user input. The reference text may be preset or configured by the user of the electronic device 100, from a selection of available reference texts of various fonts or alphabets such as English, Korean, etc., with the reference text and/or reference information stored in the memory 110, for example, in the data storage unit 112.

In step 705, the electronic device 100 performs stroke correction on the input text according to the reference text.

Herein, the stroke correction is for correcting the text input by the user according to the reference text, and is for correcting an angle, curvedness, flatness, position, or the like of each stroke. That is, the electronic device 100 may correct the input text according to the reference text by decreasing or increasing the angle of a stroke, and may correct the input text according to the reference text by curving or flattening a stroke. For example, if the user manually inputs a text (e.g., ">") having a similar shape to a Korean "¬" in the Korean alphabet, the electronic device 100 corrects a stroke of the input text ">" so that the text has a similar shape to the Korean "¬" in the Korean alphabet.

In doing so, the text input by the user may be viewed more clearly. Thus, even if the user who uses the electronic device 100 does not have a good handwriting style, the use of the stroke correction process may make the text input process more satisfactory.

In step 707, the electronic device 100 confirms an input ratio for the stroke constituting the input text. Herein, the input ratio is defined as a ratio of horizontal and vertical lengths of the stroke input by the user.

In step 709, the electronic device 100 uses the confirmed input ratio to correct the input text according to the input ratio of a correction font. Herein, the correction font is defined as a font for changing the input text. A process of correcting the text according to the input ratio of the correction font may be performed as follows.

For example, if the user sets the correction font to a palace-style font, as shown in FIG. 5C, the electronic device 100 may confirm a horizontal-to-vertical ratio for a consonant of the correction font and a horizontal-to-vertical ratio for a vowel thereof. For example, since the horizontal-to-vertical ratio for a vowel "o" of the palace-style font is about 1:1, even if the horizontal-to-vertical ratio for the vowel "o" input by the user is 2.5: 1, this ratio may be corrected to 1:1, for example, by horizontally compressing the inputted text of the vowel "o" until the inputted text has the ratio 1:1, so as to apply an effect corresponding to the palace-style font.

Upon correcting the text according to the ratio of the correction font as described above, the procedure of FIG. 7 ends.

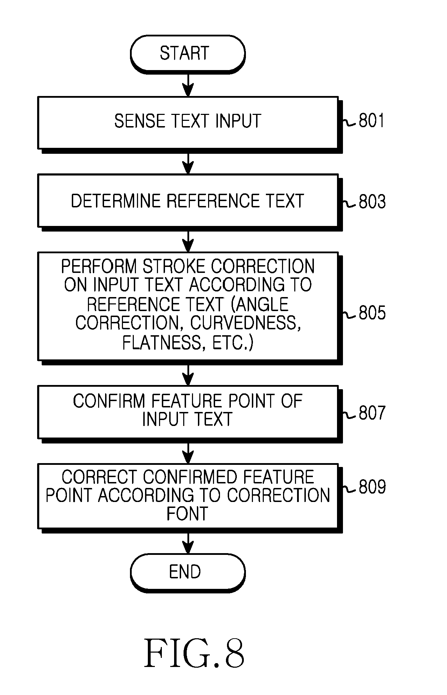

FIG. 8 is a flowchart illustrating a text correction process of the electronic device 100 according to another exemplary embodiment of the present invention.

Referring to FIG. 8, the electronic device 100 senses a text input in step 801, and determines a reference text in step 803. Herein, as described above, the reference text is defined as reference information used to determine a text corresponding to a user input. The reference text may be preset or configured by the user of the electronic device 100, from a selection of available reference texts of various fonts or alphabets such as English, Korean, etc., with the reference text and/or reference information stored in the memory 110, for example, in the data storage unit 112.

In step 805, the electronic device 100 performs stroke correction on the input text according to the reference text.

Herein, as described above, the stroke correction is for correcting the text input by the user according to the reference text, and is for correcting an angle, curvedness, flatness, position, or the like of each stroke. That is, as described above by taking the example of FIG. 7, the electronic device 100 may correct the input text according to the reference text by decreasing or increasing the angle of a stroke, and may correct the input text according to the reference text by curving or flattening a stroke.

In step 807, the electronic device 100 confirms a feature point for a stroke constituting the input text. Herein, the feature point for the stroke is defined as a part of the inputted stroke to which an effect for a specific font is applicable in the stroke constituting the text. If a palace-style font is taken as an example, as shown in FIG. 5C, since the palace-style font is **characterized in that** a stroke starts with a great thickness and ends with a narrow thickness, the electronic device 100 may confirm a stroke start position and a stroke end position as the feature points of the overall stroke.

In step 809, the electronic device 100 corrects the confirmed feature point according to a correction font.

For example, if the user sets the correction font to the palace-style font, as described above, the electronic device 100 confirms that the stroke start position is the feature point for the vowel "o" of the correction font, i.e., the palace-style font, and may apply an effect corresponding to the palace-style font by performing thickness correction such that a thickness of the feature point is increased.

Upon performing the correction process on the feature point as described above, the procedure of FIG. 8 ends.

FIG. 9 illustrates a stroke correction process of the electronic device 100 according to the exemplary embodiment of the present invention, used in connection with the methods of FIGS. 7-8.

Referring to FIG. 9, the stroke correction process is for correcting a user handwriting to more closely or identically match a shape of a reference handwriting, and may include a process of regulating an angle of a stroke constituting a text, a process of curving the stroke, a process of flattening the stroke, etc. The reference handwriting may be a set of characters and/or symbols stored in a reference handwriting library in the data storage unit 112. For example, a Korean alphabet set, an English alphabet set, a mathematical symbol set, etc. may be stored in individual libraries as reference handwriting in the data storage unit 112. The processor 122 may cause the display of a menu of available reference libraries by the display unit 162, and the processor 122 responds to user selections through the input unit 170 and/or the touch input unit 161 to set the reference handwriting.

As illustrated in FIG. 9, the electronic device 100 determines the reference handwriting by recognizing the user handwriting, and thereafter performs a process of correcting the user handwriting. Herein, the process of correcting the user handwriting is defined as the stroke correction process mentioned in conjunction with FIG. 7 and FIG. 8. The recognizing of user handwriting and matching the recognized user handwriting with a character or symbol in the reference handwriting may be accomplished by known technologies, for example, a template matching algorithm, a method of nearest neighbor classification or a method of statistical classifier of structural features and combinations thereof.

In a case A in FIG. 9, the user inputs a text 901 similar to an English "D" in the English alphabet. The electronic device 100 may determine that the reference handwriting matching the text 901 is a Korean "o" 902 in the Korean alphabet by recognizing and matching the Korean "o" with the text 901 in the user handwriting.

Accordingly, the electronic device 100 may round off an angular portion 910 to create a rounded part 912 so that the user handwriting is corrected to the Korean "o" 914 in the Korean alphabet.

In a case B in FIG. 9, the user inputs a text 903 similar to an English alphabet D but more elongated horizontally than the text 901. The electronic device 100 may determine that the reference handwriting matching the text 903 is a Korean "▭" 904 in the Korean alphabet by recognizing the user handwriting.

Accordingly, the electronic device 100 may flatten a curved portion 920 of the user handwriting so that the curved portion 920 is corrected to the Korean "▭" 924 in the Korean alphabet.

In the case A and the case B, the electronic device 100 corrects the user handwriting according to the reference handwriting set to or selected to be the Korean alphabet.

In a case C and a case D in FIG. 9, the user inputs a Korean "¬" in the Korean alphabet in a cursive writing style such as the texts 905 and 908, respectively. The electronic device 100 may determine that the reference handwriting which matches the texts 905, 908 is the Korean "¬" 907, 909, respectively, in the Korean alphabet by recognizing the user handwriting.

Accordingly, the electronic device 100 may regulate or flatten the stroke angle of the handwriting input 905, 909 by the user so that the stroke angle is corrected to the Korean "¬" in the Korean alphabet.

That is, in the case C, the electronic device 100 may correct the stroke angles 930, 932 of the user handwriting according to the reference handwriting so that the text 905 is corrected to the Korean "¬" 934 in the Korean alphabet.

In addition, in the case D, the electronic device 100 may correct the stroke angle 940 of the user handwriting according to the reference handwriting and flatten the curved portion 942 of the stroke according to the reference handwriting so that the text 908 is corrected to the Korean "¬" 944 in the Korean alphabet.

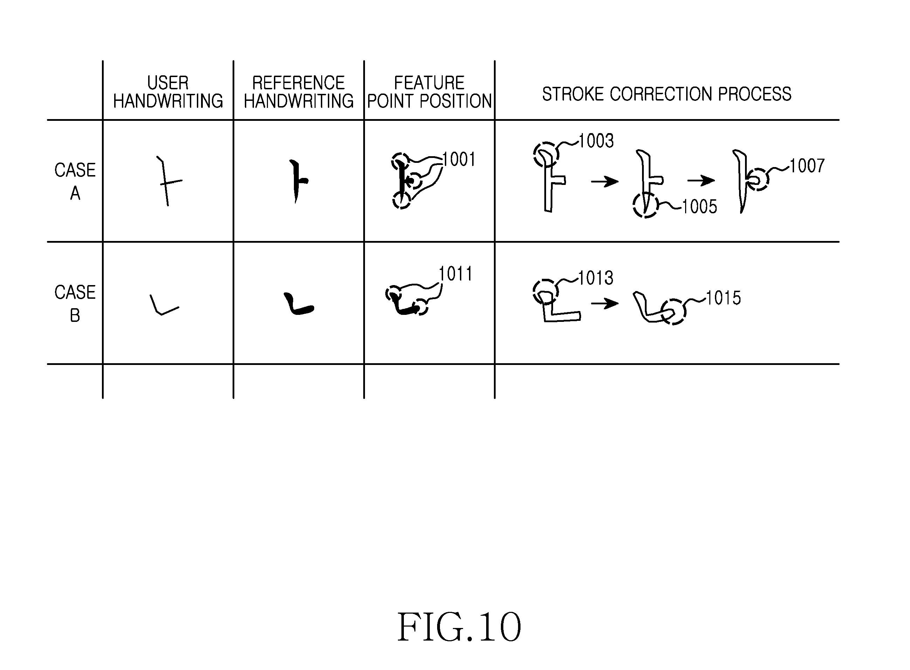

FIG. 10 illustrates a stroke correction process of the electronic device 100 according to another exemplary embodiment of the present invention.

Referring to FIG. 10, the stroke correction process is for correcting a user handwriting to a shape of a reference handwriting, and may include a process of correcting a feature point of a stroke constituting a text.

As illustrated, the electronic device 100 determines a reference handwriting by recognizing the user handwriting, and thereafter performs a process of correcting the user handwriting. Herein, the process of correcting the user handwriting is defined as the stroke correction process.

In a case A of FIG. 10, the user inputs a vowel "├". The electronic device 100 may determine that the reference handwriting matching the inputted vowel is a Korean "├" in the Korean alphabet by recognizing the user handwriting.

Accordingly, the electronic device 100 confirms the feature point from the user handwriting or the reference handwriting, and thereafter corrects the feature point according to a correction font. Herein, the feature point is defined as a part to which an effect for a specific font is applicable in the stroke, and may differ according to the correction font for changing the user handwriting. That is, if a palace-style font is taken as an example, since the palace-style font is **characterized in that** a stroke starts with a great thickness and ends with a narrow thickness, the electronic device 100 may confirm a stroke start position and a stroke end position as the feature point.

As illustrated in the case A of FIG. 10, the electronic device 100 may define at least one feature point 1001 for each stroke, and may regulate a thickness of each feature point 1003, 1005, 1007 to change the user handwriting to a correction handwriting.

In a case B of FIG. 10, the user inputs a consonant "∟". The electronic device 100 may determine that the reference handwriting matching the inputted consonant is the Korean "∟" in the Korean alphabet by recognizing the user handwriting.

Accordingly, the electronic device 100 may confirm a plurality of feature points 1011 at a stroke start position and a stroke end point from the user handwriting or the reference handwriting, and thereafter may regulate a thickness of the confirmed feature point 1011 to create new feature points 1013, 1015 and thus to change the user handwriting to a correction handwriting.

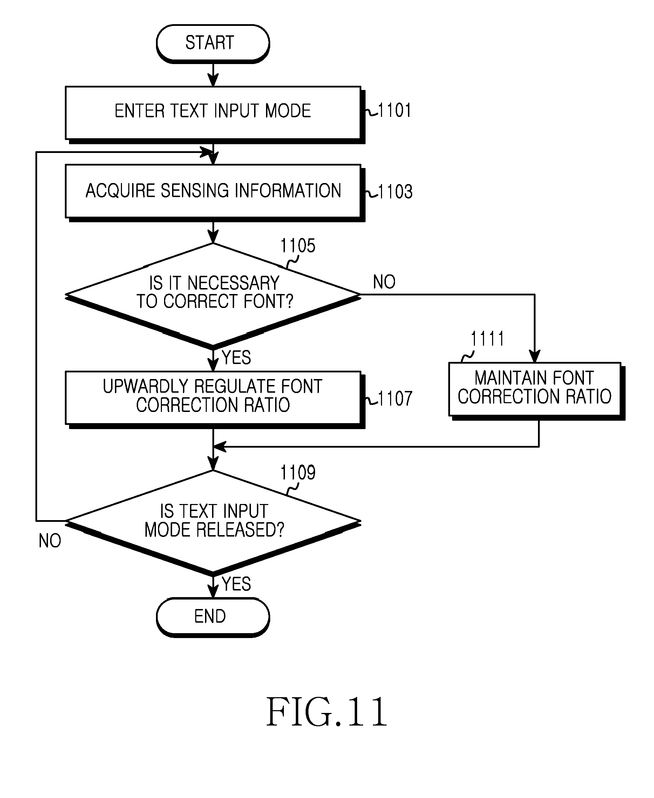

FIG. 11 is a flowchart illustrating a correction ratio regulation process of the electronic device 100 according to the exemplary embodiment of the present invention.

Referring to FIG. 11, the electronic device 100 enters a text input mode in step 1101, and acquires sensing information in step 1103.

Herein, the electronic device 100 acquires the sensing information to regulate a font correction ratio. Since there is a high possibility that the text is abnormally input when the text is input in a situation where a user and/or the electronic device 100 is in motion, the correction ratio is increased to output a text with a smooth shape.

In step 1105, the electronic device 100 confirms whether it is necessary to correct the font. For example, the electronic device 100 may recognize whether the user and/or the electronic device 100 is in motion in step 1105.

If it is determined in step 1105 that there is no need to correct the font, the method proceeds to step 1111, the electronic device 100 maintains a pre-set correction ratio of the font in step 1111, and the method proceeds to step 1109.

Otherwise, if it is determined in step 1105 that the font needs to be corrected, the method proceeds to step 1107, the electronic device 100 upwardly regulates the font correction; that is, the numerical value of the pre-set font correction ratio is increased in step 1107. The upward regulation of the font correction may be accomplished by increasing the font correction value , for example, between by 1% and 100% with 1% increment.

After performing the operation of step 1107 or step 1111, the method proceeds to step 1109, and the electronic device 100 confirms whether the text input mode is released in step 1109.

If it is confirmed in step 1109 that the text input mode is not released, the method loops back and returns to step 1103, and so the electronic device 100 repeats the process of regulating the correction ratio of the font by using the sensing information in steps 1103-1109 until the text input mode is released.

Otherwise, after step 1107, if it is confirmed in step 1109 that the text input mode is released, the procedure of FIG. 11 ends.

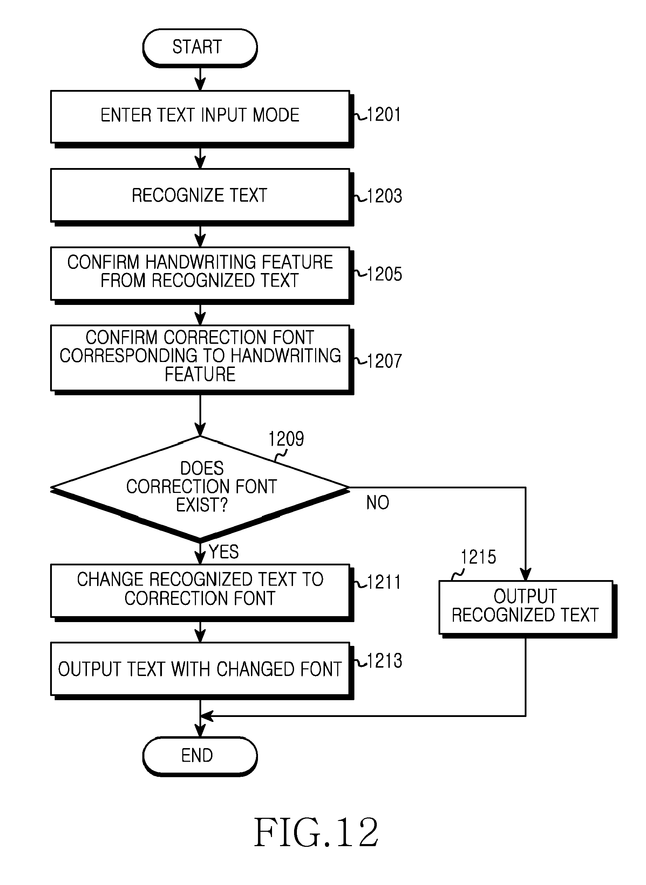

FIG. 12 is a flowchart illustrating a text correction process of the electronic device 100 according to the exemplary embodiment of the present invention.

Referring to FIG. 12, the electronic device 100 corrects a text according to a handwriting intended by a user. For example, if the text input by the user has a font similar to a palace-style font, the text may be output by automatically correcting the font of the input text according to the palace-style font.

The electronic device 100 for performing the aforementioned operation enters a text input mode in step 1201, and then recognizes the text input by the user in step 1203. Herein, the text input mode is defined as a mode capable of inputting a text such as an individual element in a Korean alphabet, an English alphabet, a numeric character, a special character, etc.

In step 1205, the electronic device 100 confirms a handwriting feature from the recognized text. Herein, the handwriting feature is a feature capable of confirming the handwriting intended by the user. The electronic device 100 may confirm the handwriting feature by analyzing a stroke of the input text.

The electronic device 100 confirms a correction font corresponding to the handwriting feature in step 1207, and confirms whether there is the correction font corresponding to the handwriting feature in step 1209.

If it is confirmed in step 1209 that the correction font corresponding to the handwriting feature is not present, the method proceeds to step 1215, in which the electronic device 100 outputs the recognized text to the display unit 162. Then, the procedure of FIG. 12 ends.

Otherwise, if it is confirmed in step 1209 that the correction font corresponding to the handwriting feature is present, the method proceeds to step 1211, in which the electronic device 100 changes the recognized text to the correction font which is the font intended by the user.

In step 1213, the electronic device 100 outputs the text with the changed font. Then, the procedure of FIG. 12 ends.

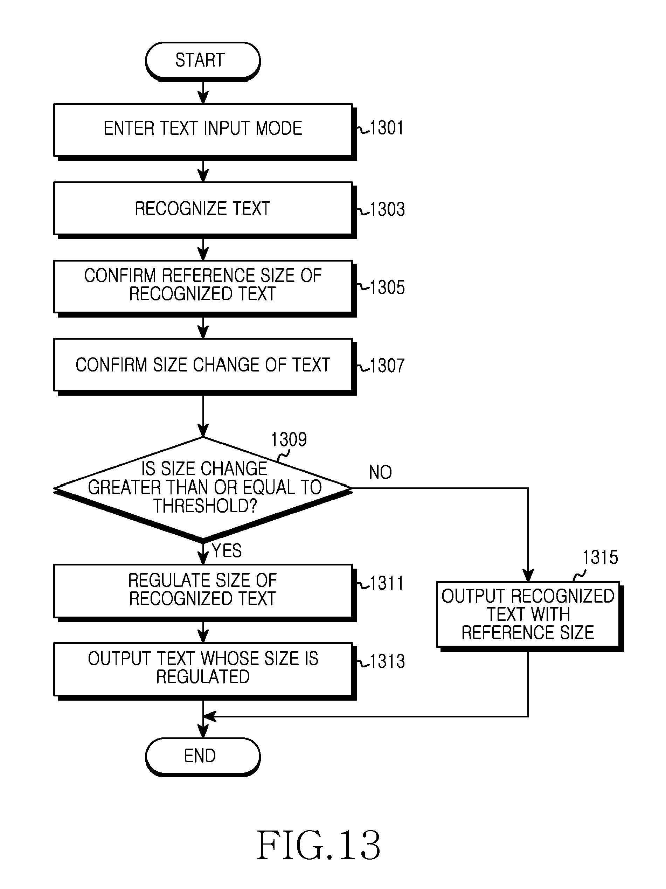

FIG. 13 is a flowchart illustrating a text correction process of the electronic device 100 according to another exemplary embodiment of the present invention.

Referring to FIG. 13, the electronic device 100 regulates a size of a specific text according to a size change of a text input by a user.

The electronic device 100 for performing the aforementioned operation enters a text input mode in step 1301, and then recognizes the text input by the user in step 1303. Herein, the text input mode is defined as a mode capable of inputting a text such as an individual element in a Korean alphabet, an English alphabet, a numeric character, a special character, etc.

In step 1305, the electronic device 100 confirms a reference size of the recognized text. Herein, the reference size of the text is defined as an output size of the input text. The text which is input with a specific size by the user is output with the reference size to the display unit 162.

The electronic device 100 confirms a size change of the text in step 1307, and confirms whether the size change is greater than or equal to a predetermined threshold in step 1309.

Herein, the electronic device 100 may define the threshold and use the threshold to increase or decrease a size of the recognized text. In addition, the electronic device 100 may emphasize the text by regulating the size of only the text whose size is changed.

If it is not confirmed in step 1309 that the size change is greater than or equal to the threshold, the method proceeds to step 1315, and the electronic device 100 outputs the recognized text with the reference size to the display unit 162. Then, the procedure of FIG. 13 ends.

Otherwise, if it is confirmed in step 1309 that the size change is greater than or equal to the threshold, the method proceeds to step 1311, and the electronic device 100 regulates the size of the recognized text. In this case, according to the reference text size, the electronic device 100 may increase or decrease, according to a specific ratio, the size of the text whose size is changed.

In step 1313, the electronic device 100 outputs the text whose size is regulated to the display unit 162. Then, the procedure of FIG. 13 ends.

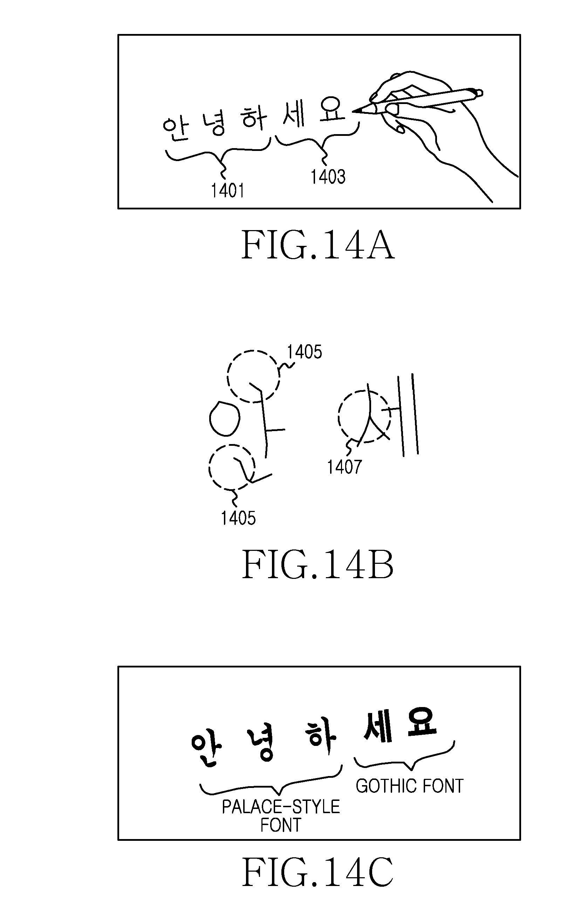

FIGS. 14A-14C illustrate a text correction process of the electronic device 100 according to the exemplary embodiment of the present invention.

Referring to FIG. 14, the electronic device 100 may correct a text according to a handwriting intended by a user.

First, the user may input the text to the electronic device 100 through a manual input as shown in FIG. 14A. In the situation of FIG. 14A, the user inputs the text by using different handwritings. That is, in a text " 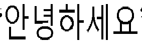 ", " 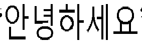 " 1401 is input with a handwriting corresponding to a palace-style font, and " 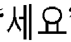 " 1403 is input with a handwriting corresponding to a Gothic font.

In this case, the electronic device 100 analyzes the input text and confirms a feature of the handwriting as shown in FIG. 14B. For example, as illustrated in FIG. 14B, the electronic device 100 may recognize a handwriting feature of the user by confirming a stroke feature (e.g., a thickness, an angle, etc.) of the input text. That is, the electronic device 100 may confirm that the input text has a feature of the palace-style font by using a stroke 1405 of the text " 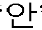 ", and may confirm that the input text has a feature of the Gothic font by using a stroke 1407 of the text " 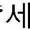 ". In this manner, the electronic device 100 may recognize a user handwriting feature for each text.

Accordingly, as shown in FIG. 14C, the electronic device 100 outputs the text input by the user by changing the text to a font corresponding to the user handwriting. That is, as illustrated, the first input text " 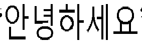 " is output by changing the first input text to the palace-style font, and the second input text " 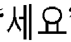 " is output by changing the second input text to the Gothic font.

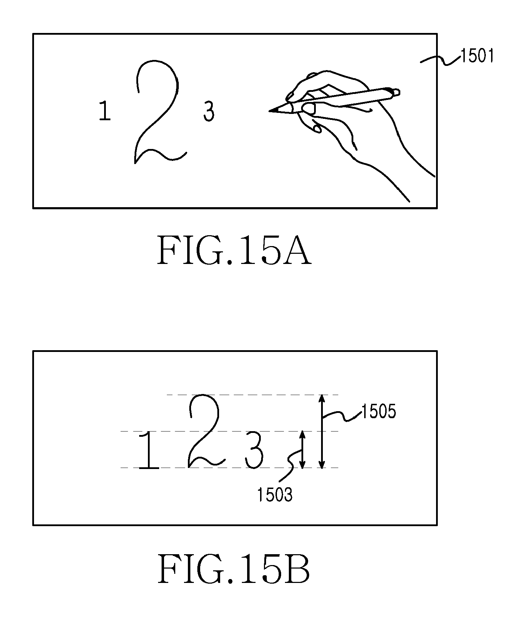

FIGS. 15A-15B illustrate a text correction process of the electronic device 100 according to another exemplary embodiment of the present invention.

Referring to FIG. 15, the electronic device 100 may regulate a size of a specific text according to a size change of a text input by a user.

First, the user may input the text to the electronic device 100 through a manual input as shown in FIG. 15A. In the situation of FIG. 15A, the user inputs numeric characters 1501 such as, for example, the Arabic numerals "1", "2", and "3" with a specific text size), which may vary for each of the input numeric characters 1501. That is, the user inputs the numeric character "2" with a relatively greater size than the numeric characters "1" and "3".

In this case, the electronic device 100 confirms a reference size for the numeric character "1", and regulates a size of the input text according to the confirmed reference size.

That is, as shown in FIG. 15B, regarding the numeric characters "1" and "3", the electronic device 100 may output the text with the reference size 1503, and regarding the numeric character "2", the electronic device 100 may output the text with a size 1505 decreased according to a specific ratio to match or to be proportional to the reference size 1503 of the other numeric characters "1" and "3". In a typical electronic device in the prior art, the text is output directly corresponding to the text exactly as inputted, as shown in FIG. 15A. However, according to the present invention, the text is output by the electronic device 100 by regulating the size of each element of text to increase or decrease according to the specific ratio, as shown in FIG. 15B. For example, the numeric character "2", which is input with a size three times greater than the numeric character "1" as shown in FIG. 15A, is reduced in size according to a limit determined by the specific ratio, such that numerical symbols input by the user may be increased only about two times as shown in FIG. 15B.

This increasing or decreasing of text sizes is to emphasize a specific text by enlarging or reducing the size of text according to the reference size even if a numeric character input by the user is relatively large in size.

According to the exemplary embodiments of the present invention as described herein, the electronic device 100 performs a process of inputting the text, a process of changing a font of the input text, and a process of outputting the text whose font is changed.

The process of changing the font of the input text is a process of correcting an abnormal part of the text which is input by the user. Herein, the abnormal part may be a part which is input such that at least one of the strokes protrudes in a portion in which the strokes overlap with each other. In this case, the electronic device 100 corrects the text by deleting a protruding part so that the text has a smooth shape.

In addition, the abnormal part may be a part in which a stroke constituting the text is abnormally input. In this case, the electronic device 100 corrects the text by extending a part which is abnormally input, so that the text has the smooth shape.

The abnormal part may be a text which is arranged irregularly. In this case, the electronic device 100 may correct the irregular arrangement to a regular arrangement.

The correction process of the electronic device 100 may be performed by the delicate correction program 113, the font correction program 114, and/or the position correction program 115 of the memory 110 of FIG. 1.

According to another exemplary embodiment of the present invention as described herein, the electronic device 100 includes a component for inputting a text, a component for changing a font of the input text, and a component for outputting the text whose font is changed.

The component for changing the font of the input text performs a process of correcting the abnormal part of the text input by the user. Herein, the abnormal part may be a part which is input such that at least one of strokes protrudes in a portion in which the strokes overlap with each other. In this case, the component for changing the font performs a process for correcting the text by deleting a protruding part so that the text has a smooth shape.

In addition, the abnormal part may be a part in which a stroke constituting the text is abnormally input. In this case, the component for changing the font performs a process for correcting the text by extending a part which is abnormally input, so that the text has the smooth shape.

The abnormal part may be a text which is arranged irregularly. In this case, the component for changing the font performs a process of correcting the irregular arrangement to a regular arrangement.

The aforementioned components may be configured in separate hardware components or may be configured in one hardware component.

According to exemplary embodiments of the present invention, an electronic device automatically corrects a text which is input by a user, so that the input text may be output by being smoothly corrected by performing font changing, size regulation, position correction, etc.

The above-described apparatus and methods according to the present invention may be implemented in hardware or firmware, or as software or computer code, or combinations thereof. In addition, the software or computer code may also be stored in a non-transitory recording medium such as a CD ROM, a RAM, a ROM whether erasable or rewritable or not, a floppy disk, CDs, DVDs, memory chips, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods described herein may be rendered in such software, computer code, software modules, software objects, instructions, applications, applets, apps, etc. that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include volatile and/or non-volatile storage and memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any medium such as communication signals transmitted by wire/wireless connections, and their equivalents. The programs and computer readable recording medium may also be distributed in network-coupled computer systems so that the computer readable code is stored and executed in a distributed fashion.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method of correcting a font of text output by an electronic device, the method comprising:
inputting the text;
changing the font of the input text; and
outputting the text whose font is changed.

2. The method of claim 1, wherein the changing of the font of the input text comprises correcting at least one of a type and size of the font and a direction, arrangement, and spacing interval of elements of the input text before outputting the input text.

3. The method of claim 1, wherein the changing of the font of the input text comprises:
confirming an input ratio for a stroke constituting the input text; and
correcting the confirmed input ratio according to an input ratio of a correction font,
wherein the input ratio is a ratio for horizontal and vertical lengths of the stroke constituting the input text.

4. The method of claim 1, wherein the changing of the font of the input text comprises:
confirming a feature point for a stroke constituting the input text; and
correcting the confirmed feature point according to a correction font,
wherein the feature point is a part to which an effect for a specific font is applicable in the stroke constituting the input text.

5. The method of claim 1, wherein the changing of the font of the input text comprises:
confirming a feature of a handwriting from the input text;
confirming a correction font corresponding to the confirmed feature; and
changing the input text to the correction font.

6. The method of claim 1, wherein the changing of the font of the input text comprises:
confirming, from the input text, a text whose size is changed; and
increasing or decreasing the text whose size is changed according to a specific ratio.

7. The method of claim 1, wherein the changing of the font of the input text comprises:
confirming a pre-set correction ratio; and
changing the font according to the confirmed correction ratio.

8. The method of claim 7, wherein the correction ratio is changed according to an environment external to the electronic device.

9. The method of claim 1, further comprising, if an abnormal part exists in the input text, correcting an abnormal part of the input text, wherein the abnormal part is at least one of a part which is input in such a manner that at least one of the strokes of the input text protrudes in a portion in which the strokes overlap with each other, and a part which is input in such a manner that the stroke constituting the input text is abnormally input.

10. An electronic device for correcting a font of text output by an, the device comprising:
an input device for inputting the text;
an output device for outputting the text;
a processor;
a memory; and
a module stored in the memory and configured to be executable by the processor,
wherein the module includes an instruction for inputting the text using the input device, changing the font of the input text, and outputting the text using the output device whose font is changed.

11. The device of claim 10, wherein the module includes an instruction for correcting at least one of a type and size of the font and a direction, arrangement, and spacing interval of elements of the input text before outputting the input text.

12. The device of claim 10, wherein the module includes an instruction for confirming an input ratio for a stroke constituting the input text, and correcting the confirmed input ratio according to an input ratio of a correction font, wherein the input ratio is a ratio for horizontal and vertical lengths of the stroke constituting the input text.

13. The device of claim 10, wherein the module includes an instruction for confirming a feature point for a stroke constituting the input text, and correcting the confirmed feature point according to a correction font, wherein the feature point is a part to which an effect for a specific font is applicable in the stroke constituting the input text.

14. The device of claim 10, wherein the module includes an instruction for confirming a feature of a handwriting from the input text, confirming a correction font corresponding to the confirmed feature, and changing the input text to the correction font.

15. A non-transit computer-readable storage medium for storing one or more programs, executed by an electronic device, including instructions for the electronic device to execute the method of claim 1.
